**Europäisches Patentamt**

**European Patent Office**

**Office européen des brevets**

(19)

(11) Veröffentlichungsnummer : **0 399 484 B1**

(12) **EUROPÄISCHE PATENTSCHRIFT**

(45) Veröffentlichungstag der Patentschrift :
**19.08.92 Patentblatt 92/34**

(51) Int. Cl.⁵ : **G01D 5/22,** G06F 3/033,
G06K 11/18

(21) Anmeldenummer : **90109742.8**

(22) Anmeldetag : **22.05.90**

(54) **Steuersignalgeber.**

(30) Priorität : **22.05.89 DE 3916570
06.12.89 DE 8914342 U**

(43) Veröffentlichungstag der Anmeldung :
**28.11.90 Patentblatt 90/48**

(45) Bekanntmachung des Hinweises auf die
Patenterteilung :
**19.08.92 Patentblatt 92/34**

(84) Benannte Vertragsstaaten :
**AT DE FR GB IT SE**

(56) Entgegenhaltungen :
**EP-A- 0 175 071
DE-A- 3 328 849
DE-C- 3 722 046**

(73) Patentinhaber : **Fernsteuergeräte Kurt Oelsch
GmbH
Jahnstrasse 68-72
W-1000 Berlin 47 (DE)**

(72) Erfinder : **Schulz, Klaus-Dieter
Ilgenweg 11 a
W-1000 Berlin 47 (DE)**
Erfinder : **Donner, Uwe
Nogatstr. 24
W-1000 Berlin 44 (DE)**

(74) Vertreter : **Weisse, Jürgen, Dipl.-Phys. et al
Bökenbusch 41 Postfach 11 03 86
W-5620 Velbert 11-Langenberg (DE)**

EP 0 399 484 B1

## Beschreibung

## Technisches Gebiet

Die Erfindung betrifft einen Steuersignalgeber zur Erzeugung eines Paares von Steuersignalen mittels eines in zwei Richtungen auslenkbaren Steuerhebels, enthaltend

(a) einen durch eine Schwenklagerung um einen Schwenkpunkt allseitig schwenkbar gelagerten Steuerhebel,

(b) ein direkt an dem Steuerhebel starr angebrachtes Betätigungsglied,

(c) erste mit dem Betätigungsglied zusammenwirkende, induktive Fühler, die auf Auslenkung des Steuerhebels in einer ersten Richtung ansprechen,

(d) zweite mit dem Betätigungsglied zusammenwirkende induktive Fühler, die auf Auslenkung des Steuerhebels in einer zweiten Richtung ansprechen.

## Zugrundeliegender Stand der Technik

Durch die DE-A-31 24 838 und die DE-A-32 20 045 sind Steuereinrichtungen mit einem zweidimensional verstellbaren Steuerhebel bekannt, durch den gleichzeitig zwei verschiedene Funktionen gesteuert werden können. Die Bewegung des Steuerhebels wird über mechanische Übertragungsmittel auf Steuerelemente in Form von Codeplatten o.dgl. übertragen. Die Bewegungen dieser Codeplatten werden durch Lichtschranken photoelektrisch abgetastet. Es wird auch vorgeschlagen, als Codeplatte eine nach einem Code geschlitzte magnetisierbare Platte zu verwenden, die induktiv abgetastet wird.

Die DE-A-3 328 849 betrifft einen Steuersignalgeber mit einem in zwei Richtungen beweglichen Steuerknüppel, durch den Induktionsspulen beeinflußt werden. Dort sitzen an dem Steuerknüppel Bügel, die jeweils einen zentral durch die Induktionsspulen sich erstreckenden Kern tragen. Bei der Bewegung des Steuerknüppels werden die Kerne relativ zu den Induktionsspulen unmittelbar bewegt.

Die EP-B-0 175 071 beschreibt einen Steuersignalgeber, zur Erzeugung zweier Steuersignale nach Maßgabe der Auslenkung eines allseitig um einen Schwenkpunkt beweglichen Steuerhebels, bei welchem ein tellerartiger Abtastkörper um den Schwenkpunkt herum direkt an dem Steuerhebel angebracht ist. In einem Grundteil sitzen Näherungssensoren, welche auf die Bewegung des Abtastkörpers um den Schwenkpunkt ansprechen. Dabei erfolgt die Abtastung berührungslos ohne mechanische Übertragungsglieder. Dadurch wird der Verschleiß und die Gefahr einer Beschädigung im Betrieb weitgehend vermieden.

Bei dem Steuersignalgeber nach der EP-B-0 175 071 sind an dem Grundteil Auflageflächen gebildet. Weiterhin sind an dem Grundteil Federglieder angebracht, die mit Vorspannung an dem Grundteil anliegen. Die Federglieder erstrecken sich mit Haltekörpern über an dem Abtastkörper angebrachte Flächen, die an den Federgliedern bei Auslenkung des Steuerhebels kraftschlüssig angreifen. Das hat den Vorteil, daß sich die Vorspannungen der Federn in der Nullstellung nicht kompensieren. Eine Auslenkung des Steuerhebels erfolgt nur dann, wenn die Vorspannung einer Feder überwunden wird. Dadurch ist die Nullstellung gut definiert.

Es sind weiterhin hydraulische Steuersignalgeber bekannt. Diese hydraulischen Steuersignalgeber enthalten ein ebenfalls unmittelbar an dem Steuerhebel um den Schwenkpunkt herum angeordnetes Betätigungsglied. Um den Schwenkpunkt herum sind Fühler in Form von Schieberventilen angeordnet. Die Achsen der Schieberventile sind parallel zu einer Mittelachse, auf welcher der Schwenkpunkt des Steuerhebels liegt. Die Schieberventile haben im wesentlichen zylindrische Gehäuse. Aus den Gehäusen ragen Stößel heraus, die federnd an dem Betätigungsglied anliegen und durch welche die Schieber verstellbar sind. Diese Gehäuse haben bestimmte, in den Konstruktionen berücksichtigte Abmessungen. Die Schieberventile steuern Ölströme zu und von hydraulischen Stellmotoren.

Nachteilig ist bei diesen rein hydraulisch arbeitenden Steuersignalgebern, daß Hydraulikleitungen bis zu dem Steuersignalgeber geführt werden müssen.

## Offenbarung der Erfindung

Der Erfindung liegt die Aufgabe zugrunde, unter Beibehaltung des Grundaufbaues der erwähnten rein hydraulischen Steuersignalgeber einen elektrischen Steuersignalgeber aufzubauen, der elektrische Signale liefert, die ihrerseits Ventile in einem Hydraulikkreis steuern.

Der Steuersignalgeber soll dabei kompakt und auch bei rauhem Betrieb, z.B. in Baumaschinen, wenig störanfällig sein und in seinen Abmessungen weitgehend denen der bisher benutzten, hydraulischen Steuersignalgeber entsprechen.

Erfindungsgemäß wird diese Aufgabe dadurch gelöst, daß

(e) die Fühler jeweils einen in einem Gehäuse gegen die Wirkung einer Feder verschiebbaren Stößel enthalten, dessen aus dem Gehäuse herausragendes Ende an dem Betätigungsglied anliegt,

(f) in dem Gehäuse eine Induktionsspule angeordnet ist, durch welche sich der Stößel erstreckt,

(g) der Stößel magnetisierbares Material enthält, das sich bei einer Bewegung des Stößels relativ zu der Induktionsspule verlagert und die Induktivität der Induktionsspule verändert, und

(h) an dem Stößel ein Nocken vorgesehen ist, der mit einem Schalter zusammenwirkt, derart, daß das Ausgangssignal des Steuersignalgebers bei einer Mittelstellung des Steuerhebels über Kontakte abgeschaltet ist.

Diese Fühler können in ihren Abmessungen und in ihrer mechanischen Funktion ähnlich ausgebildet werden wie die oben erwähnten rein hydraulischen Steuersignalgeber. Sie liefern jedoch elektrische Signale. Diese können bequem weitergeleitet werden, ohne daß dazu Hydraulikleitungen erforderlich sind. Die elektrischen Signale können auch z.B. im Sinne eines optimalen Regelverhaltens verarbeitet werden. Die elektrischen Signale steuern dann über Ventile die Ölströme dort, wo die Hydraulik arbeitet. An der Konstruktion des Steuersignalgebers mit dem Steuerhebel und dem Betätigungsglied braucht praktisch nichts geändert zu werden.

Durch die Schalter wird sichergestellt, daß in der Mittelstellung des Steuerhebels unabhängig von irgendeinem elektrischen Abgleich kein Steuersignal erscheinen kann.

Ausgestaltungen der Erfindung sind Gegenstand der abhängigen Ansprüche.

Ein Ausführungsbeispiel der Erfindung ist nachstehend unter Bezugnahme auf die zugehörigen Zeichnungen näher erläutert.

## Kurze Beschreibung der Zeichnungen

Fig.1 zeigt einen Längsschnitt eines Steuersignalgebers,

Fig.2 zeigt eine Ansicht von rechts in Fig.1 gesehen mit abgenommenem Steuerhebel und Kardangelenk.

Fig.3 zeigt einen Schnitt durch einen Fühler im betätigten Zustand.

## Bevorzugte Ausführung der Erfindung

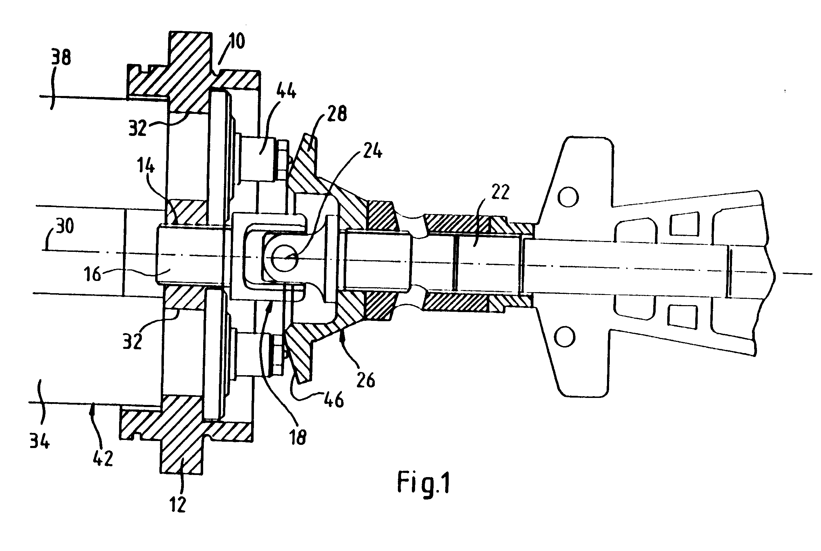

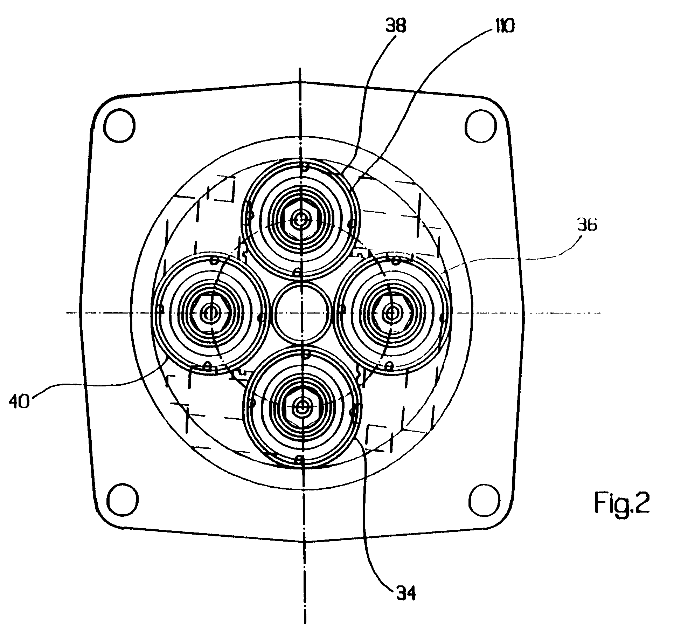

In Fig.1 und 2 ist mit 10 ein Grundkörper bezeichnet. Der Grundkörper 10 weist eine Aufnahmeplatte 12 auf. In der Aufnahmeplatte 12 ist eine Gewindebohrung 14 angebracht. In der Gewindebohrung 14 sitzt ein Gewindezapfen 16, der an einem Kardangelenk 18 angebracht ist. Über das Kardangelenk 18 ist ein Steuerhebel 22 um einen Schwenkpunkt 24 an einem Grundkörper allseitig beweglich gelagert. Das Kardangelenk und die Lagerung des Steuerhebels sind an sich bekannt und daher hier nicht im einzelnen beschrieben.

Unmittelbar an dem Steuerhebel 22 und starr mit diesen verbunden ist ein Betätigungsglied 26 vorgesehen. Das Betätigungsglied 26 ist ein glockenförmiger Körper, der um das Kardangelenk 18 herumgreift und einen flach konischen, radial nach aussen vorstehenden Rand 28 aufweist.

Der Schwenkpunkt 24 liegt auf einer Achse 30. Um die Achse 30 herum ist in der Aufnahmeplatte 12 ein Kranz von vier um jeweils 90° gegeneinander winkelversetzten Bohrungen 32 vorgesehen, von denen in dem Schnitt von Fig.1 nur zwei erkennbar sind. In diesen Bohrungen 32 sitzen in einem entsprechenden Kranz vier Fühler 34,36,38 und 40 (Fig.2), die ebenfalls um jeweils 90° gegeneinander winkelversetzt sind. Die Fühler 34,36,38 und 40 haben im wesentlichen zylindrische Gehäuse 42, aus denen an der vorderen, d.h. in Fig.1 rechten, Stirnseite Stössel 44 herausragen. Die Stössel 44 liegen in der Ruhestellung an der flach konischen Fläche 46 des Randes 28 an. Diese Anordnung ist ähnlich wie bei den oben zum Stande der Technik erwähnten rein hydraulischen Steuersignalgebern. Bei einer Auslenkung des Steuerhebels z.B. in der Papierebene von Fig.1 im Uhrzeigersinn, wird der Stössel 44 des Fühlers 34 gegen die Wirkung einer Feder in das Gehäuse 42 dieses Fühlers hineingedrückt. Der Stössel 44 des diametral gegenüberliegenden Fühlers 38 bleibt in seiner äusseren Endstellung. Bei einer Bewegung des Steuerhebels 22 z.B. nach vorn aus der Papierebene von Fig. 1 heraus, wird der Stössel 44 des Fühlers 40 in das Gehäuse 42 dieses Fühlers hineingedrückt, während der Stössel des gegenüberliegenden Fühlers 36 wieder in seiner Endstellung bleibt. Die Steuersignale steuern Ventile im Hydraulikkreis. Dabei können beispielsweise die beiden Fühler 34 und 38 ein Schiebererventil gegensinnig ansteuern, das den Ölfluss zu einem doppelt wirkenden Hydraulikzylinder steuert. Die Steuersignale an den Fühlern 34 oder 38 und 36 oder 40 können unabhängig voneinander erzeugt werden. Die Fühler 34, 36, 38 und 40 sind jedoch hier keine hydraulischen Fühler sondern induktive Fühler.

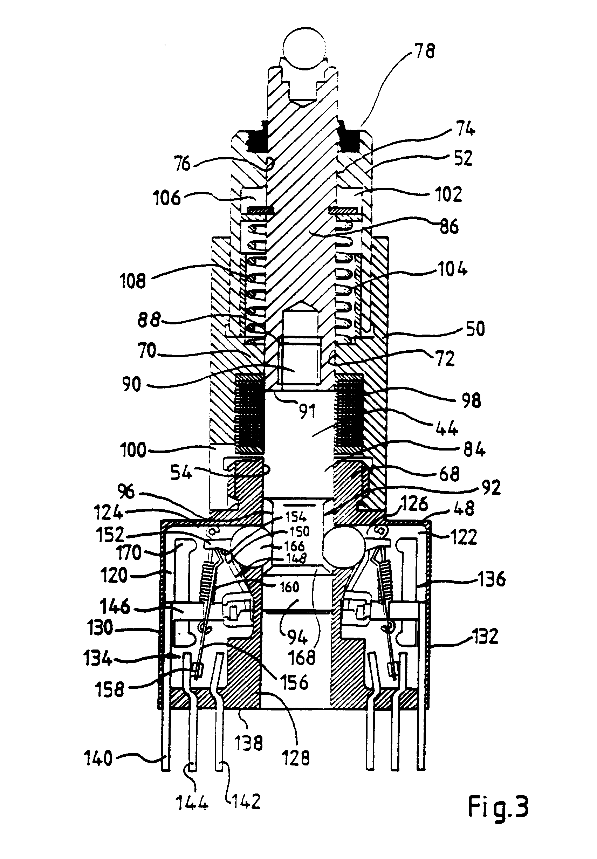

In Fig. 3 ist ein solcher Fühler 34 in einem Längsschnitt dargestellt. In Fig. 3 ist der Fühler im betätigten Zustand.

Das Gehäuse 42 des Fühlers 34 besteht aus einem Schaltergehäuse 48, einem Mittelteil 50 und einem Vorderteil 52. Das Schaltergehäuse 48 weist eine zentrale Bohrung 54 auf. Der Stössel 44 ist in der zentralen Bohrung 54 geführt. An dem in Fig. 3 oberen Ende ist an den rückwärtigen Teil 48 ein Gewindestutzen 68 angeformt.

Der Mittelteil 50 hat hohlzylindrische Grundform. Der Mittelteil 50 weist eine Trennwand 70 auf. Die Trennwand 70 ist mit einer zentralen Bohrung 72 versehen, die mit der Bohrung 54 des Schaltergehäuses 48 fluchtet und den gleichen Durchmesser hat wie diese.

Der Mittelteil 50 ist mit einem mit Innengewinde versehenen Kragen auf den Gewindestutzen 68 des Schaltergehäuses 48 aufgeschraubt.

Der Vorderteil 52 ist topfförmig mit einer Stirnwand 74. Der Vorderteil 52 ist von oben in Fig.3 in den oberhalb der Trennwand 70 gebildeten Innenraum des Mittelteils 50 eingepreßt. Die Stirnwand 74 weist eine zentrale Bohrung 76 auf, die ebenfalls mit den Bohrungen 54 und 72 fluchtet und den gleichen Durchmesser hat wie diese.

Der Stößel 44 ist in den Bohrungen 54,72 und 76 geführt. Der Stößel 44 ragt oben in Fig.3 aus dem Gehäuse 42 durch die Bohrung 76 heraus. Eine Dichtung 78 dichtet die Durchführung des Stößels 44 durch die Stirnwand 74 ab, so daß das Innere des Gehäuses 42 gegen das Eindringen von Schmutz abgedichtet ist. In der Stirnfläche des Stößels 44 sitzt eine Kontaktkugel 82, über welche der Stößel 44 an dem Betätigungsglied 26 anliegt.

Der Stößel 44 besteht aus zwei Teilen: Ein rückwärtiger, in Fig. 3 unterer, erster Teil 84 des Stößels 44 besteht aus einem unmagnetischen Material. Ein vorderer, in Fig. 3 oberer, zweiter Teil 86 des Stößels 44 besteht aus einem Material hoher Permeabilität. Es kann sich dabei um Stahl handeln oder auch um Weicheisen. Der zweite Teil 86 ist mit einer Gewindebohrung 88 auf einen Gewindezapfen 90 des ersten Teiles 84 aufgeschraubt. Die Stirnflächen des ersten und des zweiten Teiles 84 und 86 bilden somit eine Trennfläche 91 zwischen magnetisierbarem und unmagnetischem Material.

Am linken Ende in Fig.3 ist der Stößel 44 spulenartig ausgedreht und bildet einen Nocken 92.

Zwischen dem Stößel 44, der Trennwand 70, der Innenwandung des Mittelteils 50 und der Stirnfläche des Gewindenippels 68 ist ein Ringraum gebildet. In diesem Ringraum ist eine Induktionsspule 98 angeordnet. Die Induktionsspule 98 ist so zwischen der Trennwand 70 des Mittelteils 50 und der Stirnfläche des Gewindenippels 68 fest gehalten. Durch einen seitlichen Durchbruch 100 des rückwärtigen Teiles 48 des Gehäuses 42 können die Anschlüsse der Induktionsspule 98 herausgeführt werden. Wie aus Fig.3 ersichtlich ist, liegt die Trennfläche 91 zwischen dem unmagnetischen ersten Teil 84 und dem magnetisierbaren zweiten Teil 86 des Stößels 44 im Bereich der Induktionsspule 98: Bei nicht betätigtem Stößel (Fig.4) ist die Trennfläche 90 am oberen Ende der Induktionsspule 98. Der Kern der Induktionsspule 98 besteht praktisch vollständig aus unmagnetischem Material. Bei der Betätigung des Stößels 44 wird der magnetisierbare zweite Teil 86 des Stößels 44 mehr und mehr in die Induktionsspule 98 hineinbewegt. In der Endstellung hat die Induktionsspule 98 praktisch einen vollen Kern von magnetisierbarem Material.

Ein zweiter Ringraum 102 wird innerhalb des Vorderteils 52 gebildet. In diesem Ringraum 102 sitzt eine Schraubenfeder 104. Die Schraubenfeder 104 stützt sich an der Trennwand 70 ab und liegt an einer Ringschulter des Stößels 44 an die von einem Federring 106 gebildet ist. Um die Schraubenfeder 104 herum sitzt in dem Vorderteil 52 eine Anschlaghülse 108, die sich ebenfalls an der Trennwand 70 abstützt. Die Abstandshülse 108 begrenzt den Hub des Stößels 44 nach unten in Fig.3, also in Betätigungsrichtung. Der Stößel bewegt sich nur soweit nach unten, bis der Kern der Induktionsspule 98 vollständig aus magnetisierbarem Material besteht. Nach oben ist der Hub des Stößels 44 durch Anlage des Federringes 106 an der Stirnwand 74 des Vorderteils 52 begrenzt. In dieser Stellung ist der zweite Teil 86 des Stößels 44 praktisch vollständig aus der Induktionsspule 98 herausgezogen. Der Schalter 62 ist in seiner Ausschaltstellung, so daß in dieser Stellung der Fühler 34 kein Signal abgibt.

Die einzelnen Fühler 34,36,38 und 40 sitzen mit ihren Vorderteilen 52 in den Bohrungen 32 der Aufnahmeplatte 12. Befestigungsflansche 110 liegen an der vorderen Oberfläche der Aufnahmeplatte 12 an. Die Stirnflächen der Mittelteile 50 liegen um den jeweiligen Vorderteil 52 herum an der hinteren Oberfläche der Aufnahmeplatte 12 an.

Das Schaltergehäuse 48 weist beiderseits einer Bohrung 54 zwei diametral gegenüberliegende Kammern 120 und 122 auf. Die Kammern 120 und 122 stehen an ihren in Fig. 3 oberen Enden über radiale Kanäle 124 bzw. 126 mit der Bohrung 54 in Verbindung, in welcher de Stössel 44 geführt ist. Das Schaltergehäuse ist ein isolierendes Kunststoffgehäuse. Es weist einen zentralen Teil 128 mit dem Gewindestutzen 68 und gegenüberliegende, die Kammern 120 und 122 bildende Ansätze 130 und 132.

In den Kammern 120 und 122 sitzen zwei übereinstimmende Schalter 134 bzw. 136. Die Schalter 134 und 136 sind als Schnappschalter (Mikroschalter) ausgebildet. Es wird nachstehend nur der eine dieser Schalter 134 beschrieben.

In der in Fig. 3 unteren Stirnfläche 138 des Schaltergehäuses 48 sitzen drei Klemmen 140, 142 und 144. Die Klemmen 140, 142 und 144 sind Blechstreifen, welche in das als Kunststoff-Druckgussteil hergestellte Schaltergehäuse 48 eingegossen sind. Die Klemme 140 bildet einen relativ langen, geraden Streifen, der sich längs der Innenwand der Kammer 120 erstreckt. An dem inneren Ende der Klemme 140 ist ein sich senkrecht zur Ebene der Klemme 140 erstreckender Tragarm 146 befestigt. An dem Ende des Tragarmes 146 ist ein Winkelhebel 148 schwenkbar angebracht. Der Winkelhebel 148 weist einen ersten Arm 150 auf, der sich längs der inneren Wandung der Kammer 120 nach oben in Fig. 3 erstreckt, und einen zweiten Arm 152, der an dem freien Ende des ersten Armes sitzt und im wesentlichen radial auswärts ragt. Der zweite Arm 152 bildet eine Pfanne 154. In dieser Pfanne sitzt das eine Ende einer Kontaktzunge 156. Die Kontaktzunge trägt an ihrem anderen Ende auf beiden Seiten Kontakte 158. Eine Schraubenfeder 160 ist an einen Zapfen 162 des Schaltergehäuses 48 angehängt und greift als Zugfeder an der Kontaktzunge 156 an. Die Schraubenfeder 160 erstreckt sich unter einem Kleinen Winkel zu der Längsrichtung der Kontaktzunge 156. Die Schraubenfeder 160 sucht über die Kontaktzunge 156 und den Arm 152 den Winkelhebel 148 stets im Uhrzeigersinn in Fig. 3 zu verschwenken.

In der in Fig. 3 dargestellten Lage des Stössels 44 wirkt die Schraubenfeder 160, die in Fig. 3 links von der Kontaktzunge liegt, im Uhrzeigersinn auf die Kontaktzunge. Dadurch wird die Kontaktzunge in Anlage an der dritten Klemme 144 gehalten. Der Winkelhebel 148 als Betätigungsglied des Schalters 134 liegt dabei federnd an einer Kugel 166 an, die in dem radialen Kanal 124 geführt ist. Die Kugel 166 weicht dabei nach innen aus und liegt in dem ausgedrehten Abschnitt 96 des Nockens 92.

Wenn der Stössel 44 freigegeben wird, bewegt er sich unter dem Einfluss der Feder 108 nach oben in Fig. 3. Über eine Schrägfläche 168 wird die Kugel 166 nach aussen gedrückt und Kommt auf dem zylindrischen Abschnitt 94 zur Auflage. Damit wird der Winkelhebel 148 entgegen dem Uhrzeigersinn in Fig. 3 verschwenkt, bis er an einem Anschlag 170 zur Anlage kommt. Entsprechend wird das obere Ende der Kontaktzunge 156 nach links bewegt. In dieser Stellung liegt die Schraubenfeder 160 rechts von der Kontaktzunge. Nach Durchlaufen eines Totpunktes übt daher die Schraubenfeder 160 jetzt ein Moment entgegen dem Uhrzeigersinn auf die Kontaktzunge 156 aus. Die Kontaktzunge schnappt in Anlage an die erste Klemme 142.

In gleicher Weise, allerdings spiegelbildlich zu dem Schalter 134 wird der Schalter 136 angesteuert.

## Patentansprüche

1. Steuersignalgeber zur Erzeugung eines Paares von Steuersignalen mittels eines in zwei Richtungen auslenkbaren Steuerhebels, enthaltend

(a) einen durch eine Schwenklagerung (18) um einen Schwenkpunkt (24) allseitig schwenkbar gelagerten Steuerhebel (22),

(b) ein direkt an dem Steuerhebel (22) starr angebrachtes Betätigungsglied (26),

(c) erste mit dem Betätigungsglied (26) zusammenwirkende, induktive Fühler (34,38), die auf Auslenkung des Steuerhebels (22) in einer ersten Richtung ansprechen,

(d) zweite mit dem Betätigungsglied (26) zusammenwirkende induktive Fühler (36,40), die auf Auslenkung des Steuerhebels (22) in einer zweiten Richtung ansprechen,

**dadurch gekennzeichnet, daß**

(e) die Fühler (34,36,38,40) jeweils einen in einem Gehäuse (42) gegen die Wirkung einer Feder (104) verschiebbaren Stößel (44) enthalten, dessen aus dem Gehäuse (42) herausragendes Ende an dem Betätigungsglied (26) anliegt,

(f) in dem Gehäuse (42) eine Induktionsspule (98) angeordnet ist, durch welche sich der Stößel (44) erstreckt,

(g) der Stößel (44) magnetisierbares Material enthält, das sich bei einer Bewegung des Stößels (44) relativ zu der Induktionsspule (98) verlagert und die Induktivität der Induktionsspule (98) verändert, und

(h) an dem Stößel (98) ein Nocken (92) vorgesehen ist, der mit einem Schalter (62) zusammenwirkt, derart, daß das Ausgangssignal des Steuersignalgebers bei einer Mittelstellung des Steuerhebels (22) über Kontakte abgeschaltet ist.

2. Steuersignal nach Anspruch 1, **dadurch gekennzeichnet, daß**

(a) das Gehäuse (42) ein Schaltergehäuse (48) aufweist, das eine Führung für den Stößel (44) bildet,

(b) das Schaltergehäuse (48) zu beiden Seiten des Stößels (44) je einen als Schnappschalter ausgebildeten Schalter (134,136) umschließt,

(c) der Stößel (44) als Nocken (92) eine Eindrehung mit einer abgeschrägten Stirnwand (168) aufweist und

(d) das Schaltergehäuse (48) quer zu der Führung für den Stößel (44) zu den Schaltern (134, 136) sich erstreckende Kanäle (124,126) aufweist, in denen Kugeln (166) geführt sind, die jeweils an einem Betätigungsglied (152) eines Schalters (134,136) anliegen und von einer Schalterfeder (160) in Anlage an dem Stößel (44) gehalten werden.

5

3. Steuersignalgeber nach Anspruch 2, **dadurch gekennzeichnet, daß** das Schaltergehäuse (48) einen zentralen Gewindestutzen (68) aufweist, der in einen mit Innengewinde versehenen Kragen des Gehäuses (42) eingeschraubt ist.

4. Steuersignalgeber nach Anspruch 3, **dadurch gekennzeichnet, daß** das Schaltergehäuse (48) ein elektrisch isolierendes Kunststoffgehäuse ist.

5. Steuersignalgeber nach Anspruch 4, **dadurch gekennzeichnet, daß**

(a) jeder der Schalter drei Klemmen (140,142,144) aufweist, welche aus dem Schaltergehäuse (48) an dessen dem Gehäuse (42) abgewandter Stirnseite herausgeführt sind,

(b) eine in elektrischem Kontakt mit einer der drei Klemmen (140) stehende Kontaktzunge (156) durch eine einen kleinen Winkel mit der Längsrichtung der Kontaktzunge bildende Schraubenfeder (160) in Ruhestellung in Anlage an einer zweiten Klemme (144) gehalten wird,

(c) das Betätigungsglied (152) mit dem den Klemmen (140,142,144) abgewandten Ende der Kontaktzunge (156) gekoppelt ist, so daß es durch die Schraubenfeder (160) gleichzeitig in Anlage an der Kugel (166) gehalten wird,

(d) die Kontaktzunge (156) durch den Nocken (44) über die Kugel (166) und das Betätigungsglied (152) nach Überwindung eines Totpunktes an die dritte Klemme (142) anlegbar ist.

6. Steuersignalgeber nach Anspruch 5, **dadurch gekennzeichnet, daß**

(a) das Betätigungsglied (148) ein Winkelhebel ist, der an seinem einen Ende schwenkbar gelagert ist, und

(b) an dem freien Hebelarm (152) des Winkelhebels (148) ein rückwärtiges Ende der Kontaktzunge (156) unter dem Einfluß der Schraubenfeder (160) anliegt, wobei die Schraubenfeder (160) den Winkelhebel (148) in federnder Anlage an der Kugel (166) hält.

7. Steuersignalgeber nach einem der Ansprüche 1 bis 6, **dadurch gekennzeichnet, daß**

(a) die Fühler (34,36,38,40) um jeweils 90° gegeneinander winkelversetzt in einem Kranz um eine Achse (30) herum angeordnet sind, auf welcher der Schwenkpunkt (24) des Steuerhebels (22) liegt, und

(b) die Stößel (44) parallel zu der besagten Achse (30) geführt sind.

8. Steuersignalgeber nach Anspruch 7, **dadurch gekennzeichnet, daß**

(a) der Steuerhebel (22) über ein Kardangelenk (18) an einem Grundkörper (10) gelagert ist, und

(b) das Betätigungsglied (26) ein glockenförmiger Körper ist, der um das Kardangelenk (18) herumgreift und einen flach konischen, radial nach außen vorstehenden Rand (28) aufweist, an welchem die Stößel (44) anliegen.

9. Steuersignalgeber nach Anspruch 8, **dadurch gekennzeichnet, daß**

(a) das Gehäuse (42) jedes Fühlers (34,36,38,40) einen Vorderteil (52) aufweist,

(b) das Schaltergehäuse (48) eine zentrale längsverlaufende Bohrung (54) aufweist, in welcher der Stößel (44) geführt ist, und die quer sich erstreckenden Kanäle für die Kugeln,

(c) der Mittelteil (50) mit einer Gewindebohrung auf den Gewindestutzen (68) des Schaltergehäuses (48) aufgeschraubt ist und eine Trennwand (70) mit einer zentralen Bohrung (72) aufweist, wobei diese zentrale Bohrung (72) mit der Bohrung (54) des rückwärtigen Teils (48) fluchtet und ebenfalls den Stößel (44) führend aufnimmt,

(d) der Vorderteil (52) topfförmig ist und teleskopartig in den Mittelteil (50) eingepresst ist,

(e) die Induktionsspule (98) zwischen einer Stirnfläche des Gewindestutzens (68) und der Trennwand (70) des Mittelteils (50) angeordnet ist und

(f) eine in dem Vorderteil (52) angeordnete Schraubenfeder (104) sich an der Trennwand (70) abstützt und an einer Ringschulter des Stößels (44) anliegt.

10. Steuersignalgeber nach Anspruch 9, **dadurch gekennzeichnet, daß** der Stößel (44) aus einen rückwärtigen ersten Teil (84) aus unmagnetischem Werkstoff und einem vorderen, zweiten Teil (86) aus einem Werkstoff hoher Permeabilität besteht, die im Bereich der Induktionsspule (98) aneinander anschließen.

11. Steuersignalgeber nach Anspruch 9 oder 10, **dadurch gekennzeichnet, daß**

(a) die Schraubenfeder (104) von einer Anschlaghülse (108) umgeben ist, die in dem Vorderteil (52) sitzt und an der Trennwand (70) des Mittelteils (50) anliegt, und

(b) die Ringschulter des Stößels (44) in einer Endstellung, in welcher das magnetisierbare Material des Stößels (44) die Induktionsspule (98) vollständig ausfüllt, an der Anschlaghülse (108) zur Anlage kommt und den Hub des Stößels (44) begrenzt.

12. Steuersignalgeber nach Anspruch 11, **dadurch gekennzeichnet, daß**

(a) an dem Stößel (44) eine zweite Ringschulter vorgesehen ist, die an dem Gehäuse (42) zur Anlage kommt, wenn das magnetisierbare Material im wesentlichen vollständig aus der Induktionsspule (98) herausbewegt ist, und

(b) in der Nullstellung des Steuerhebels (22) die zweite Ringschulter an dem Gehäuse (42) anliegt.

13. Steuersignalgeber nach Anspruch 12, **dadurch gekennzeichnet, daß** die Ringschultern von den beiden gegenüberliegenden Seiten eines in den Stößel (44) eingerasteten Federringes (106) gebildet sind, wobei die vordere Seite des Federringes (106) an der Stirnwand (74) des Vorderteils (52) des Gehäuses (42) anliegt.

## Claims

1. Control signal transmitter for generating a pair of control signals by means of a control lever deflectable in two directions, comprising

(a) a control lever (22) universally pivotally mounted by a pivot bearing (18) about a pivot point (24),

(b) an actuating member (26) rigidly attached directly to the control lever (22),

(c) first inductive sensors (34, 38) cooperating with the actuating member (26), which sensors respond to deflections of the control lever (22) in a first direction,

(d) second inductive sensors (36, 40) cooperating with the actuating member (26), which sensors (36, 40) respond to deflections of the control lever (22) in a second direction,

**characterized in that**

(e) the sensors each (34, 36, 38, 40) comprise a steam (44) slidable in a housing (42) against the action of a spring (104), the end of the steam (44) extending out of the housing (42) engaging the actuating member (26),

(f) an inductance coil (98) is arranged in the housing (42), through which inductance coil (98) the steam (44) extends,

(g) the steam (44) comprises magnetizable material which is displaced when the steam (44) is moved relative to the inductance coil (98) and varies the inductivity of the inductance coil (98), and

(h) a cam (92) is provided on the steam (98) and coacts with a switch (62) such that the output signal of the control signal transmitter is switched off through contacts when the control lever (22) is in a center position.

2. Control signal transmitter as set forth in claim 1, **characterized in that**

(a) the housing (42) has a switch housing (48) which forms a guide for the steam (44),

(b) the switch housing (48) on both sides of the steam (44) surrounds a switch (134, 136) formed as snap-action switch,

(c) the steam (44) has as cam (92) a turned groove having a bevelled front wall (168), and

(d) the switch housing (48) has passages (124, 126) extending transversely to the guide for the steam (44) and toward the switches (134, 136), in which passages (124, 126) balls (166) are guided each of which each engages an actuating member (152) of a switch (134, 136) and is held in engagement with the steam (44) by a switch spring (160).

3. Control signal transmitter as set forth in claim 2, **characterized in that** the switch housing (48) has a central threaded socket (68) which is screwed into an internally threaded collar of the housing (42).

4. Control signal transmitter as set forth in claim 3, **characterized in that** the switch housing (48) is an electrically insulating synthetic housing.

5. Control signal transmitter as set forth in claim 4, **characterized in that**

(a) each of the switches has three terminals (140, 142, 144) which are guided out of the switch housing (48) on its end face remote from the housing (42),

(b) a contact stud (156) being in electrical contact with one of the three terminals (140) is held in position of rest in engagement with a second terminal (144) through a coil spring (160) forming a small angle with the longitudinal direction of the contact stud,

(c) the actuating member (152) is coupled to the end of the contact stud (156) remote from the terminals (140, 142, 144) such that it, at the same time, is held in engagement with the ball (166) by the coil spring (166),

(d) the contact stud (156) is arranged to be moved into engagement with the third terminal (142) by the cam (44) through the ball (166) and the actuating member (152) after a dead point has been overcome.

6. Control signal transmitter as set forth in claim 5, **characterized in that**

(a) the actuating member (148) is an angle lever which is pivotally mounted at one end, and

(b) a rear end of the contact stud (156) engages the free lever arm (152) of the angle lever (148) under the action of the coil spring (160), the coil spring (160) holding the angle lever (148) in resilient engagement with the ball (166).

7. Control signal transmitter as set forth in any one of the claims 1 to 6, **characterized in that**

(a) the sensors (34, 36, 38, 40) are arranged mutually angularly offset by 90° in a collar about an axis (30) on which the pivot point (24) of the control lever (22) is located, and

7

(b) the steam (44) is guided parallelly to said axis (30).

8. Control signal transmitter as set forth in claim 7, **characterized in that**

(a) the control lever (22) is mounted at a basic body (10) through a cardan joint (18),

(b) the actuating member (26) is a bell-shaped body which extends around the cardan joint (18) and has a flat conical edge (28) projecting radially outwards and being engaged by the steams (44).

9. Control signal transmitter as set forth in claim 8, **characterized in that**

(a) the housing (42) of each sensor (34, 36, 38, 40) has a front portion (52),

(b) the switch housing (48) has a central longitudinal bore (54) in which the steam (44) is guided, and the transversely extending passages for the balls,

(c) the central portion (50) is screwed with a threaded bore onto the the threaded socket (68) of the switch housing (48) and has a partition (70) having a central bore (72), this central bore (72) being aligned with the bore (54) of the rear portion (48) and likewise slidingly accommodate the steam (44),

(d) the front portion (52) is pot-shaped and telescopically pressed into the central portion (50),

(e) the inductance coil (98) is arranged between an end face of the threaded socket (68) and the partition (70) of the central portion (50) , and

(f) a coil spring (104) arranged in the front portion (52) is supported on the partition (70) and engages an annular shoulder of the steam (44).

10. Control signal transmitter as set forth in claim 9, **characterized in that** the steam consists of a rear first portion (84) of non-magnetic material and a front second portion (86) of a material with high permeability, which portions are connected to each other in the area of the inductance coil (98).

11. Control signal transmitter as set forth in claim 9 or 10, **characterized in that**

(a) the coil spring (104) is surrounded by a stop surface (108) which is provided on the front portion (52) and engages the partition (70) of the central portion (50), and,

(b) in an end position in which the magnetizable material of the steam (44) completely fills the inductance coil (98), the annular shoulder of the steam (44) is in engagement with the stop sleeve (108) and limits the stroke of the steam.

12. Control signal transmitter as set forth in claim 11, **characterized in that**

(a) a second annular shoulder is provided at the steam (44), which annular shoulder is in engagement with the housing (42) when the magnetizable material is substantially completely moved out of the inductance coil (98), and

(b) the second annnular shoulder engages the housing (42) in the zero position of the control lever (22).

13. Control signal transmitter as set forth in claim 12, **characterized in that** the annular shoulders are formed by the two opposite sides of a spring washer (106) snapped into the steam (44), the front side of the spring washer (106) engaging the front wall (74) of the front portion (52) of the housing (42).


## Revendications

1. Capteur de signal de commande destiné à engendrer une paire de signaux de commande au moyen d'un levier de commande déviable dans deux directions, comprenant

(a) un levier de commande (22) monté par un palier de pivotement (18) de sorte à pouvoir pivoter autour d'un point de pivotement (24) dans toutes les directions,

(b) un élément d'actionnement (26) monté rigidement directement au levier de commande (22),

(c) des premiers détecteurs inductifs (34, 38) coopérant avec l'élément d'actionnement (26) et répondant à la déviation du levier de commande (22) dans une première direction,

(d) des seconds détecteurs inductifs (36,40) coopérant avec l'élément d'actionnement (26) et répondant à la déviation du levier de commande (22) dans une seconde direction,

**caractérisé par le fait que**

(e) les détecteurs (34, 36, 38, 40) comprennent respectivement une tige (44) déplacable dans un boîtier (42) contre l'action d'un ressort (104), et dont l'extrémité saillant du boîtier (42) est appliquée contre l'élément d'actionnement (26),

(f) une bobine d'induction (98) est disposée dans le boîtier (42), la tige (44) s'étendant par cette bobine d'induction,

(g) la tige (44) comprend une matière magnétisable se déplacant lors d'un mouvement de la tige (44) relativement à la bobine d'induction (98) et modifiant l'inductivité de la bobine d'induction (98), et

(h) un saillant (92) est prévu sur la tige (98) et coopère avec un interrupteur (62) de sorte que le signal de sortie du capteur de signal de commande est mis hors circuit par des contacts en cas de position centrale du levier de commande (22).

2. Capteur de signal de commande selon la revendication 1, **caractérisé par le fait que**

(a) le boîtier (42) présente un boîtier d'interrupteur (48) formant un guidage pour la tige (44),

(b) le boîtier d'interrupteur (48) renferme sur les deux côtés de la tige (44) un interrupteur (134, 136) à la fois, formé comme interrupteur instantané,

(c) la tige (44) comme saillant (92) présente une gorge tournée dans la masse avec un front biseauté (168), et

(d) le boîtier d'interrupteur (48) présente transversalement au guidage pour la tige (44), des canaux (124, 126) s'étendant vers les interrupteurs (134, 136) et dans lesquels sont guidés des sphères (166) appliquées respectivement contre un élément d'actionnement (152) d'un interrupteur (134, 136) et tenues par un ressort d'interrupteur (160) en contact avec la tige (44).

3. Capteur de signal de commande selon la revendication 2, **caractérisé par le fait que** le boîtier d'interrupteur (48) présente un manchon fileté central (68) vissé dans un collet du boîtier (42) muni d'un filet femelle.

4. Capteur de signal de commande selon la revendication 3, **caractérisé par le fait que** le boîtier d'interrupteur (48) est un boîtier de matière plastique électriquement isolant.

5. Capteur de signal de commande selon la revendication 4, **caractérisé par le fait que**

(a) chaque interrupteur présente trois bornes de connexion (140, 142, 144) guidées hors du boîtier de commande (48) sur son front opposé au boîtier (42),

(b) une lame de contact (156) en contact électrique avec l'une des trois bornes de connexion (140) est tenue en position d'arrêt en contact avec la seconde borne de connexion (144) par un ressort cylindrique (160) formant un petit angle avec la direction longitudinale de la lame de contact,

(c) l'élément d'actionnement (152) est couplé à l'extrémité de la lame de contact (156) opposée aux bornes de connexion (140, 142, 144) de sorte qu'il est tenu simultanément en contact avec la sphère (166) par le ressort cylindrique (160),

(d) la lame de contact (156) peut être appliquée contre la troisième borne de connexion (142) par le saillant (44) à travers la sphère (166) et l'élément d'actionnement (152) après dépassement d'un point mort.

6. Détecteur de signal de commande selon la revendication 5, **caractérisé par le fait que**

(a) l'élément d'actionnement (148) est un levier angulaire qui, à l'une de ses extrémité, est monté de sorte à pouvoir pivoter, et

(b) une extrémité arrière de la lame de contact (156) est appliquée contre le bras de levier libre (152) du levier angulaire (148) sous l'action du ressort cylindrique (160) qui tient le levier angulaire (148) en contact élastique avec la sphère (166).

7. Capteur de signal de commande selon l'une des revendications 1 à 6, **caractérisé par le fait que**

(a) les détecteurs (34, 36, 38, 40) sont disposés angulairement décalés respectivement de 90° l'un par rapport à l'autre dans une couronne autour d'un axe (30) sur lequel est situé le centre de gravité (24) du levier de commande (22), et

(b) les tiges (44) sont guidées parallèlement audit axe (30).

8. Capteur de signal de commande selon la revendication 7, **caractérisé par le fait que**

(a) le levier de commande (22) est monté par un joint cardanique (18) sur un corps de base (10), et

(b) l'élément d'actionnement (26) est un corps en forme de cloche saillant autour du joint cardanique (18) et présentant un bord (28) planement conique et saillant radialement vers l'extrérieur, et contre lequel sont appliquées les tiges (44).

9. Capteur de signal de commande selon la revendication 8, **caractérisé par le fait que**

(a) le boîtier (42) de chaque détecteur (34, 36, 38, 40) présente une partie d'avant (52),

(b) le boîtier d'interrupteur (48) présente un alésage central (54) s'étendant longitudinalement et dans lequel sont guidés la tige (44) et les canaux transversaux pour les sphères,

(c) la partie centrale (50) est vissée avec un alésage fileté sur le manchon fileté (68) du boîtier d'interrupteur (48) et présente une paroi de séparation (70) avec un alésage central (72) alignant sur l'alésage (54) de la partie arrière (48) et recevant également la tige (44) par guidage,

(d) la partie d'avant (52) est en forme de pot et pressée en forme de téléscope dans la partie centrale (50),

(e) la bobine d'induction (98) est disposée entre une surface frontale du manchon fileté (68) et la paroi de séparation (70) de la partie centrale (50), et

(f) un ressort cylindrique (104) disposé dans la partie d'avant (52) est supporté par la paroi de sépartation (70) et appliqué contre un épaulement annulaire de la tige (44).

10. Capteur de signal de commande selon la revendication 9, **caractérisé par le fait que** la tige (44) est constituée d'une première partie arrière (84) d'une matière première non-magnétique et d'une seconde partie d'avant (86) d'une matière première d'une perméabilité élevée, qui font suite l'une à l'autre dans le domaine de la bobine d'induction (98).

11. Capteur de signal de commande selon la revendication 9 ou 10, **caractétrisé par le fait que**

(a) le ressort cylindrique (104) est entrouré d'un manchon de butée (108) situé dans la partie d'avant (52) et appliqué contre la paroi de séparation (70) de la partie centrale ( 50 ), et

(b) l'épaulement annulaire de la tige (44) est en contact avec le manchon de butée (108) et limite la levée de la tige (44) dans une position finale dans laquelle la matière magnétisable de la tige (44) remplit complètement la bobine d'induction (98).

12. Capteur de signal de commande selon la revendication 11, **caractérisé par le fait que**

(a) un second épaulement annulaire est prévu à la tige (44), qui est en contact avec le boîtier (42) lorsque la matière magnétisable est déplacée généralement complètement hors de la bobine d'induction (98), et

(b) dans la position zéro du levier de commande (22), le second épaulement annulaire est en contact avec le boîtier (42).

13. Capteur de signal de commande selon la revendication 12, **caractérisé par le fait que** les épaulements annulaires sont formés par les deux côtés opposés d'un anneau de ressort (106) encliqueté dans la tige (44), le côté avant de l'anneau de ressort (106) étant en contact avec le front (74) de la partie d'avant (52) du boîtier (42).

Fig.1

Fig.2

Fig.3